# FASCICULE DE BREVET EUROPEEN

(11) **EP 2 930 067 B1**
(45) Date de publication et mention de la délivrance du brevet: **01.03.2017**
(21) Numéro de dépôt: 15161742.0
(22) Date de dépôt: 30.03.2015
(51) Int. Cl.: B60R 19/03, B60R 19/24, B60R 19/34, B60R 19/02

(54) **POUTRE DE PARE-CHOCS DE VÉHICULE, ENSEMBLE PARE-CHOCS ET VÉHICULE ASSOCIÉS**
STOSSFÄNGERTRÄGER FÜR FAHRZEUG, STOSSFÄNGERANORDNUNG UND ENTSPRECHENDES FAHRZEUG
BUMPER BEAM FOR A VEHICLE, ASSOCIATED BUMPER ASSEMBLY AND VEHICLE

(30) Priorité: 09.04.2014 FR 1453160
(43) Date de publication de la demande: 14.10.2015
(73) Titulaire: Automotive Exteriors Europe, 69007 Lyon (FR)
(72) Inventeur: Borde, Patrick, 25200 MONTBELIARD (FR)
(74) Mandataire: Remy, Vincent Noel Paul

(56) Documents cités:
- EP-A1- 2 762 367
- DE-A1-102012 200 410
- DE-U1-202009 006 264

## Description

La présente invention concerne une poutre de pare-chocs de véhicule, comprenant :
- une traverse, et
- au moins un absorbeur de chocs, l'absorbeur de chocs étant prévu pour porter la traverse fixée sur l'absorbeur et comprenant une platine destinée à la fixation de l'absorbeur de chocs sur une structure d'un véhicule, l'absorbeur de chocs étant réalisé en une matière plastique éventuellement renforcée de fibres.

Les véhicules automobiles sont conçus pour répondre de façon convenable à différents types de chocs, tel que les chocs à petite vitesse ou « chocs parking », pour une vitesse comprise entre 2,5 et 4 km/h (ECE42), les chocs à moyenne vitesse ou « chocs réparabilité », RCAR 16 km/h (Danner) et RCAR 10 km/h (Bumper Test), et les chocs à grande vitesse, pour une vitesse comprise entre 56 et 65 km/h.

Pour ce faire, les véhicules automobiles intègrent une ou plusieurs poutres de pare-chocs dans un ensemble pare-chocs avant ou arrière, en appui sur des longerons du véhicule automobile. En cas de choc, ces poutres de pare-chocs, grâce à leurs propriétés mécaniques spécifiques, se déforment de manière à absorber au moins une partie de l'énergie du choc.

Ainsi, il est connu de mettre en oeuvre des poutres de pare-chocs en tôle d'acier, qui présentent de bonnes performances mécaniques, mais également une masse importante, contribuant à augmenter la masse totale du véhicule automobile.

Il est connu d'utiliser des absorbeurs de chocs en matériau plastique composite afin de diminuer la masse de la poutre de pare-chocs et d'améliorer l'absorption de l'énergie du choc. Cependant, il existe un risque de désintégration de l'ensemble pare-chocs en matériau composite lors du choc.

DE 10 2012 2004 10 A1 décrit une structure de support ayant un absorbeur en matériau plastique renforcé de fibres.

Un des buts de l'invention est de proposer une poutre de pare-chocs de masse réduite, de coût de fabrication réduit, pouvant absorber efficacement l'énergie de chocs et permettant de préserver une cohésion à l'ensemble pare-chocs même après un choc important.

A cet effet, l'invention fournit une poutre de pare-chocs de véhicule selon la revendication 1. Selon d'autres modes de réalisation, la poutre de pare-chocs comprend une ou plusieurs des caractéristiques des revendications 2 à 5.

L'invention concerne également un ensemble pare-chocs selon la revendication 6 ou la revendication 7, et un véhicule automobile selon la revendication 8.

L'invention et ses avantages seront mieux compris à la lecture de la description qui va suivre, donnée uniquement à titre d'exemple non limitatif, et faite en référence aux dessins annexés, sur lesquels :
- la figure 1 est une vue schématique en perspective éclatée d'un ensemble pare-chocs;
- la figure 2 est une vue en perspective d'une partie de la poutre de pare-chocs de la figure 1 illustrant un absorbeur de chocs et des organes de liaison.
- la figure 3 est une vue analogue à la figure 2 illustrant un absorbeur de chocs et un organe de liaison selon l'invention.

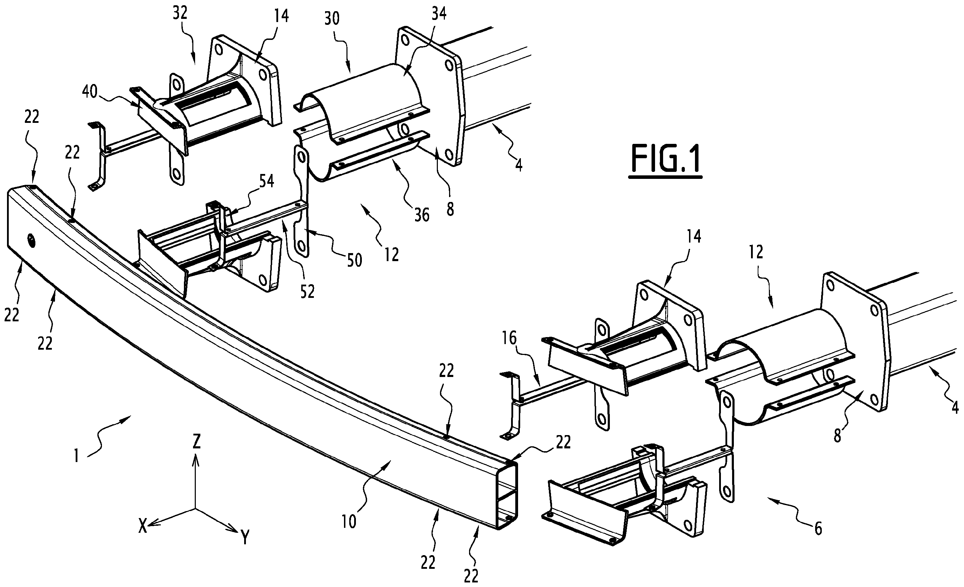

Un ensemble pare-chocs 1 de véhicule est représenté sur la figure 1.

L'ensemble pare-chocs 1 comprend une poutre de pare-chocs 6 fixée aux extrémités des deux longerons 4 de la caisse en blanc ou structure d'un véhicule, notamment un véhicule automobile.

Les termes « longitudinal », « transversal », « gauche », « droit », « haut », « bas » sont utilisés par référence au repère orthogonal usuel des véhicules automobiles, comprenant :
- un axe longitudinal X, orienté de l'arrière vers l'avant,
- un axe transversal Y, orienté de la droite vers la gauche, et
- un axe vertical Z, orienté du bas vers le haut.

L'ensemble pare-chocs 1 est un ensemble pare-chocs avant, auquel cas les longerons 4 sont des longerons de la partie avant de la structure, ou un ensemble pare-chocs arrière, auquel cas les longerons 4 sont des longerons de la partie arrière de la structure.

Les longerons 4 sont des longerons principaux de structure ou des longerons auxiliaires, tels que des prolonges de berceau moteur avant ou arrière ou des longerons d'ailes avant ou arrière.

Les longerons 4 s'étendent suivant la direction longitudinale, chacun suivant un axe longitudinal respectif. Les longerons 4 sont espacés suivant la direction transversale. Chaque longeron 4 est muni à son extrémité d'une platine de longeron 8 pour la fixation de la poutre de pare-chocs 6 sur le longeron 4.

La poutre de pare-chocs 6 comprend une traverse 10 et deux absorbeurs de chocs 12. Chaque absorbeur de chocs 12 comprend une platine 14 destinée à la fixation de l'absorbeur de chocs 12 sur un longeron 4. La poutre de pare-chocs 6 comprend, en outre, pour chaque absorbeur de chocs 12, au moins un organe de liaison 16 reliant la platine 14 de l'absorbeur de chocs 12 à la traverse 10.

La poutre de pare-chocs 6 est destinée à être fixée sur les longerons 4 par l'intermédiaire des absorbeurs de chocs 12, chaque absorbeur de chocs 12 étant fixé sur et en appui sur un longeron 4 respectif par l'intermédiaire de la platine 14 de l'absorbeur 12 et de la platine de longeron 8.

La traverse 10 s'étend suivant la direction transversale. La traverse 10 est en appui suivant la direction longitudinale sur les longerons 4 par l'intermédiaire des absorbeurs de chocs 12.

La traverse 10 est avantageusement creuse. La traverse 10 est, par exemple, en métal, notamment en acier.

La traverse 10 est munie sur sa face supérieure et sur sa face inférieure une pluralité de trous de fixations 22 pour fixer la traverse 10 aux organes de liaison 16. Dans l'exemple représenté sur la figure 1, la traverse comporte quatre trous 22 par absorbeurs de chocs 12, les trous 22 permettant à la fois de fixer la traverse 10 à l'absorbeur 12 et aux organes de liaison 16.

L'écartement transversal des absorbeurs de chocs 12 est sensiblement égal à celui des longerons 4. Chacun des deux absorbeurs de chocs 12 est fixé sur l'extrémité d'un longeron 4 respectif par l'intermédiaire de sa platine 14. De plus, chaque absorbeur de chocs 12 est disposé à une extrémité respective de la traverse 10 et s'étend suivant la direction longitudinale. Chaque absorbeur de chocs 12 prolonge longitudinalement le longeron 4 associé.

Chaque absorbeur de chocs 12 est réalisé au moins en partie en une matière plastique éventuellement renforcée de fibres.

L'absorbeur de choc 12 est apte à absorber l'énergie d'un choc en se déformant entre un état de repos et un état écrasé. Pour des chocs important, l'absorbeur de choc 12 absorbe également de l'énergie en se dégradant. On entend par « se dégrader » que l'absorbeur de choc 12 n'est plus intègre, c'est-à-dire apte à retenir la traverse 10 en position par rapport au longeron 4.

L'absorbeur de chocs 12 comprend un élément absorbeur 30 et une enveloppe 32. L'enveloppe 32 entoure l'élément absorbeur 30.

L'élément absorbeur 30 est avantageusement un cylindre creux. L'élément absorbeur 30 est réalisé en matériau composite plastique, de préférence en matériau plastique renforcé de fibres longues, connu sous le nom de LCFRP. L'élément absorbeur 30 s'étend selon la direction longitudinale X.

Comme l'illustre la figure 1, l'élément absorbeur 30 est formé de deux demi-coques 34, 36. Chaque demi-coque 34, 36 est demi-cylindrique selon la direction longitudinale. Chaque demi-coque 34, 36 est munie de deux rebords latéraux pour la fixation mutuelle des demi-coques par réunion de leurs rebords correspondants deux à deux, et fixation des rebords réunis, par exemple à l'aide de vis ou de rivets.

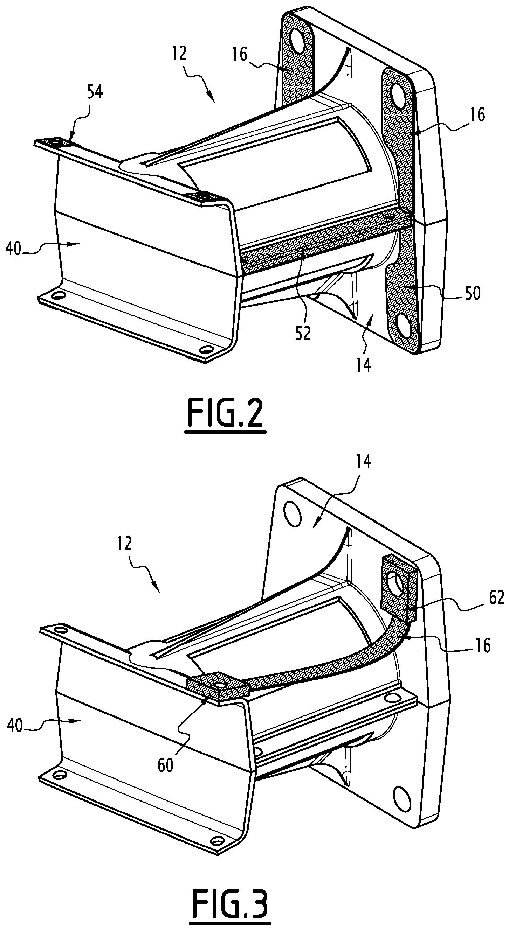

L'enveloppe 32 de l'absorbeur de chocs 12 est constituée de matériau plastique renforcé de fibres courtes. Dans l'exemple illustré sur les figures 1 et 2, l'enveloppe 32 est formée de deux demi-enveloppes, chacune recouvrant un demi-cylindre respectif.

La surface de l'élément absorbeur 30 est pleine. L'enveloppe 32 est ajourée.

La platine 14 destinée à la fixation de l'absorbeur de chocs 12 sur un longeron 4 est formée sur l'enveloppe 32. La platine 14 comporte des trous de fixation.

Chaque absorbeur de chocs 12 est prévu pour porter la traverse 10 fixée sur l'absorbeur 12. Dans l'exemple illustré sur les figures 1 et 2, l'absorbeur 12 comporte, sur son enveloppe 32, un support de fixation de traverse 40, percé sur sa surface inférieur et supérieure en regard des trous de fixation 22 de la traverse 10. Le support 40 définit un profil en U orienté transversalement, la traverse 10 étant reçue dans le support 40.

Dans l'exemple représenté, deux organes de liaisons 16 sont disposés sur chaque absorbeur de chocs 12.

Chaque organe de liaison 16 est propre à se déformer sans rompre en cas de choc, impactant l'absorbeur de choc 12, de telle manière que l'absorbeur de choc 12 ne porte plus la traverse 10.

Chaque organe de liaison 16 forme un support auxiliaire pour porter la traverse 10 en cas d'endommagement de l'absorbeur 12 tel que l'absorbeur 12 ne porte plus la traverse 10.

Chaque organe de liaison 16 est propre à retenir la traverse 10 à la platine 14 après déformation de l'absorbeur 12 en cas de chocs, à une distance verticale inférieure à environ 100 mm vers le bas, après déformation de l'absorbeur en cas de chocs 12.

Dans l'exemple représenté sur les figures 1 et 2, l'organe de liaison 16 est une pièce métallique fixée sur la platine 14 et sur la traverse 10.

L'organe de liaison 16 comporte une première partie de fixation 50, une partie centrale de raccord 52 et une deuxième partie de fixation 54.

La première partie de fixation 50 est fixé sur la platine 14.

La partie arrière de fixation 50 s'étend selon la direction verticale Z et définit deux trous en regard des trous de la platine 14.

La première partie de fixation 50 est destinée à lier l'organe de liaison 16 à la platine 14.

La partie centrale de raccord 52 s'étend selon la direction longitudinale X le long de l'élément absorbeur. Elle définit une gouttière dans laquelle sont insérés deux rebords adjacents réunis des demi-coques. La partie centrale de raccord 52 est à cheval sur les deux rebords réunis. La partie centrale de raccord 52 permet de sceller l'élément absorbeur 30.

La deuxième partie de fixation 54 est fixée à la traverse.

La deuxième partie de fixation 54 s'étend selon la direction verticale Z. Elle comprend, à ses extrémités des retours s'étendant selon la direction longitudinale. Les retours sont percés en regard des trous 22 de la traverse 10. La deuxième partie de fixation 54 est destinée à lier la traverse 10 et le support de fixation 40 de l'absorbeur de choc 12 à l'organe de liaison 16.

L'organe de liaison 16 est déformé plastiquement lors d'un choc. Il est moins fragile que l'absorbeur de choc 12. L'organe de liaison 16 est propre à se déformer facilement sans rompre. L'absorbeur de chocs 12 est propre à se comprimer sous un effort d'écrasement maximal. L'organe de liaison 16 est propre à se comprimer sous un effort inférieur à 1/100 de l'effort d'écrasement maximal. Par exemple, l'organe de liaison 16 est propre à se comprimer longitudinalement sous un effort inférieur à 1 kN, par exemple inférieur à environ 100 N. L'absorbeur 12 est propre à se déformer longitudinalement sous un effort inférieur à 100 kN.

L'organe de liaison 16 reste en un seul morceau après le choc et est ainsi apte à retenir la traverse 10. En effet, la première partie de fixation 50, la deuxième partie de fixation 54 et la partie centrale 50 restent solidaires.

L'organe de liaison 16 solidarise la platine 14 de l'absorbeur de chocs 12 à la traverse 10, de sorte que l'organe de liaison 16 soit propre à maintenir la traverse 10 solidaire à la platine 12 à la place de l'absorbeur de chocs 12, lorsque l'absorbeur de chocs 12 est dégradé.

Le fonctionnement du dispositif va maintenant être décrit.

Lors d'un choc important du véhicule, l'absorbeur de chocs 12 se dégrade. Cependant, les organes de liaisons 16 maintiennent une cohésion de l'assemblage de l'ensemble pare-chocs 1 et lient la platine 14 à la traverse 10. Les organes de liaisons 16 empêchent ainsi la traverse 10 de tomber sur le sol même si elle n'est plus maintenue par l'absorbeur de chocs 12. Ceci permet au véhicule de pouvoir rouler pour rejoindre un garage en vue d'une réparation.

Un mode de réalisation selon l'invention va maintenant être décrit, en regard de la figure 3. Ce mode de réalisation diffère du mode de réalisation précédemment décrit en ce que, l'organe de liaison 16 est un lien flexible fixé sur la platine 14 et sur la traverse 10 par des extrémités de fixation 60 et 62. Par exemple, l'organe de liaison 16 est une tresse, notamment une tresse métallique ou textile.

La longueur du lien, lorsqu'il est tendu, est avantageusement proche de la longueur d'un absorbeur 12.

Lors d'un choc, après une déformation de l'absorbeur 12 en cas de chocs, si l'absorbeur 12 n'est plus apte à retenir la traverse 10, la traverse 10 tend le lien flexible sous l'effet de son poids. La traverse 10 est suspendue au longeron par l'intermédiaire de l'organe de liaison 16. L'organe de liaison 16 retient alors la traverse 10 par rapport aux longerons 4 structuraux du véhicule à une distance inférieure à environ 100 mm vers le bas, après déformation de l'absorbeur 12 en cas de chocs. L'organe de liaison 16 retient la traverse 10 de sorte à l'empêcher de toucher le sol.

L'invention propose une poutre de pare-chocs 6 de masse réduite, de coût de fabrication réduit, et pouvant absorber efficacement l'énergie de chocs et permettant de préserver une forme assemblée à l'ensemble pare-chocs 1 même après un choc important.

## Revendications

1. Poutre de pare-chocs de véhicule (6), comprenant :
- une traverse (10), et
- au moins un absorbeur de chocs (12), l'absorbeur de chocs (12) étant prévu pour porter la traverse (10) fixée sur l'absorbeur et comprenant une platine destinée à la fixation de l'absorbeur de chocs (12) sur une structure d'un véhicule, l'absorbeur de chocs (12) étant réalisé en une matière plastique éventuellement renforcée de fibres,
**caractérisée en ce que** la poutre de pare-chocs (6) comprend en outre au moins un organe de liaison (16) reliant la platine (14) de l'absorbeur de chocs (12) à la traverse (10), l'organe de liaison (16) étant propre à retenir la traverse (10) à la platine (14) après déformation de l'absorbeur (12) en cas de chocs l'organe de liaison (16) étant un lien flexible fixé sur la platine (14) et sur la traverse (10).

2. Poutre de pare-chocs (6) selon la revendication 1, comprenant deux absorbeurs de chocs (12), chaque absorbeur (12) étant disposé à une extrémité respective de la traverse (10).

3. Poutre de pare-chocs (6) selon la revendication 1 ou la revendication 2, dans laquelle l'organe de liaison (16) est une tresse.

4. Poutre de pare-chocs (6) selon la revendication 3, dans laquelle l'organe de liaison (16) est une tresse métallique.

5. Poutre de pare-chocs (6) selon la revendication 3, dans laquelle l'organe de liaison (16) est une tresse textile.

6. Ensemble pare-chocs (1) de véhicule comprenant deux longerons (4) structuraux ayant chacun une extrémité et une poutre de pare-chocs (6) selon l'une quelconque des revendications précédentes, comprenant deux absorbeurs de chocs (12) chacun fixé sur l'extrémité d'un longeron (4) respectif par l'intermédiaire de sa platine (14).

7. Ensemble (1) selon la revendication 6, dans laquelle l'organe de liaison (16) est propre à retenir la traverse (10) par rapport aux longerons (4) structuraux du véhicule à une distance inférieure à environ 100 mm vers le bas, après déformation de l'absorbeur (12) en cas de chocs.

8. Véhicule comprenant un ensemble pare-chocs (1) selon la revendication 6 ou la revendication 7.

## Patentansprüche

1. Stoßfängerträger für ein Fahrzeug (6), umfassend
- einen Querträger (10), und
- wenigstens einen Stoßdämpfer (12), wobei der Stoßdämper (12) eingerichtet ist, den Querträger (10) zu tragen, der an dem Dämpfer befestigt ist, und eine Platte zur Befestigung des Stoßdämpfers (12) an einer Struktur eines Fahrzeugs umfasst, wobei der Stoßdämper (12) aus einem Kunststoffmaterial gebildet ist, das gegebenenfalls mit Fasern verstärkt sein kann,
**dadurch gekennzeichnet, dass** der Stoßfängerträger (6) weiter zumindest ein Verbindungselement (16) umfasst, welches die Platte (14) des Stoßdämpfers (12) mit dem Querträger (10) verbindet, wobei das Verbindungselement (16) eingerichtet ist, den Querträger (10) nach einer Verformung des Stoßdämpfers (12) im Falle eines Stoßes bzw. Aufpralls an der Platte (12) zurückzuhalten, wobei das Verbindungselement (16) ein flexibles Band ist, das an der Platte (14) und dem Querträger (10) befestigt ist.

2. Stoßfängerträger (6) nach Anspruch 1, mit zwei Stoßdämpfern (12), wobei jeder Dämpfer (12) an einem jeweiligen Ende des Querträgers (10) angeordnet ist.

3. Stoßfängerträger (6) nach Anspruch 1 oder 2, wobei das Verbindungselement (16) ein Geflecht ist.

4. Stoßfängerträger (6) nach Anspruch 3, wobei das Verbindungselement (16) ein metallisches Geflecht ist.

5. Stoßfängerträger (6) nach Anspruch 3, wobei das Verbindungselement (16) ein textiles Geflecht ist.

6. Stoßfängeranordnung (1) eines Fahrzeugs, umfassend zwei Strukturlängsträger (4), welche jeweils ein Ende und einen Stoßfängerträger (6) nach einem der vorhergehenden Ansprüche aufweisen, wobei die Anordnung zwei Stoßdämpfer (12) aufweist, wobei jeder der Stoßdämpfer (12) mittels seiner Platte (14) an das Ende des jeweiligen Längsträgers (4) befestigt ist.

7. Anordnung (1) nach Anspruch 6, wobei das Verbindungselement (16) eingerichtet ist, nach Verformung des Stoßdämpfers im Falle eines Stoßes bzw. Aufpralls den Querträger (10) relativ zu den Strukturlängsträgern (4) in einem Abstand nach unten von weniger als ungefähr 100 mm zurückzuhalten.

8. Fahrzeug, umfassend eine Stoßfängeranordnung (1) nach einem der Ansprüche 6 oder 7.

## Claims

1. Bumper beam (6) for a vehicle, comprising
- a cross-member (10), and
- at least one shock absorber (12), the shock absorber (12) being designed to carry the cross-member (10) attached to the absorber and comprising a plate intended to attach the shock absorber (12) to a vehicle structure, the shock absorber (12) being made of plastic optionally reinforced with fibres,
**characterised in that** the bumper beam (6) further comprises at least one connecting member (16) connecting the plate (14) of the shock absorber (12) to the cross-member (10), the connecting member (16) being adapted to secure the cross-member (10) to the plate (14) after deformation of the absorber (12) in case of shocks, the connecting member (16) being a flexible link attached to the plate (14) and to the cross-member (10).

2. Bumper beam (6) according to claim 1, comprising two shock absorbers (12), each absorber (12) being arranged at a respective end of the cross-member (10).

3. Bumper beam (6) according to claim 1 or claim 2, wherein the connecting member (16) is a braid.

4. Bumper beam (6) according to claim 3, wherein the connecting member (16) is a metallic braid.

5. Bumper beam (6) according to claim 3, wherein the connecting member (16) is a textile braid.

6. Bumper assembly (1) for a vehicle comprising two structural longitudinal members (4) each having an end and a bumper beam (6) according to any one of the preceding claims, comprising two shock absorbers (12) each attached to the end of a respective longitudinal member (4) by means of its plate (14).

7. Assembly (1) according to claim 6, wherein the connecting member (16) is adapted to secure the cross-member (10) relative to the structural longitudinal members (4) of the vehicle at a distance less than about 100 mm downwards, after deformation of the absorber (12) in case of shocks.

8. Vehicle comprising a bumper assembly (1) according to claim 6 or claim 7.
